# EUROPEAN PATENT SPECIFICATION

(11) **EP 3 536 114 B1**
(45) Date of publication and mention of the grant of the patent: **10.07.2024**
(21) Application number: 17801612.7
(22) Date of filing: 30.10.2017
(51) Int. Cl.: H04W 76/15, H04J 11/00, H04W 56/00

(54) **GROUP RADIO RESOURCE MANAGEMENT IN CELLS EMPLOYING A CLEAR CHANNEL ASSESSMENT PROCEDURE**
GRUPPENFUNKRESSOURCENVERWALTUNG IN ZELLEN UNTER VERWENDUNG EINES CLEAR-CHANNEL-ASSESSMENT-VERFAHRENS
GESTION DE RESSOURCES RADIO DE GROUPE DANS DES CELLULES UTILISANT UNE PROCÉDURE D'ÉVALUATION DE CANAL LIBRE

(30) Priority: 04.11.2016 WO PCT/EP2016/076725
(43) Date of publication of application: 11.09.2019
(73) Proprietor: Nokia Technologies Oy, 02610 Espoo (FI)
(72) Inventor: ZHANG, Li, Beijing 100012 (CN); DALSGAARD, Lars, 90230 Oulu (FI); NURMINEN, Riikka Karoliina, 00720 Helsinki (FI)
(74) Representative: Script IP Limited
(86) International application number: PCT/EP2017/077780
(87) International publication number: WO 2018/083064

(56) References cited:
- EP-A1- 3 018 938
- WO-A1-2016/021979
- US-A1- 2014 050 206
- US-A1- 2017 238 272

## Description

### Field

The present invention relates to the field of wireless communications. More specifically, the present invention relates to methods, apparatus, systems and computer programs for joint radio resource management (RRM) across a group cell.

### Background

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, electronic mail (email), text message, multimedia and/or content data and so on. Non-limiting examples of services provided comprise two-way or multi-way calls, data communication or multimedia services and access to a data network system, such as the Internet.

In a wireless communication system at least a part of a communication session between at least two stations occurs over a wireless link. Examples of wireless systems comprise public land mobile networks (PLMN), satellite based communication systems and different wireless local networks, for example wireless local area networks (WLAN). The wireless systems can typically be divided into cells, and are therefore often referred to as cellular systems.

A user can access the communication system by means of an appropriate communication device or terminal. A communication device of a user is often referred to as user equipment (UE). A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The communication system and associated devices typically operate in accordance with a given standard or specification which sets out what the various entities associated with the system are permitted to do and how that should be achieved. Communication protocols and/or parameters, which shall be used for the connection are also typically defined. An example of attempts to solve the problems associated with the increased demands for capacity is an architecture that is known as the long-term evolution (LTE) of the Universal Mobile Telecommunications System (UMTS) radio-access technology. The LTE is being standardized by the 3rd Generation Partnership Project (3GPP). The various development stages of the 3GPP LTE specifications are referred to as releases. Certain releases of 3GPP LTE (e.g., LTE Rel-11, LTE Rel-12, LTE Rel-13) are targeted towards LTE-Advanced (LTE-A). LTE-A is directed towards extending and optimizing the 3GPP LTE radio access technologies.

Communication systems may be configured to use a mechanism for aggregating radio carriers to support wider transmission bandwidth. In LTE this mechanism is referred to as carrier aggregation (CA) and can, according to LTE Rel. 12 specifications, support a transmission bandwidth up to 100 MHz. A communication device with reception and/or transmission capabilities for CA can simultaneously receive and/or transmit on multiple component carriers (CCs) corresponding to multiple serving cells, for which the communication device has acquired/monitors system information needed for initiating connection establishment. When CA is configured, the communication device has only one radio resource control (RRC) connection with the network. At RRC connection establishment/reestablishment or handover, one serving cell provides the non-access stratum (NAS) mobility information, such as tracking area identity information. At RRC connection (re)establishment or handover, one serving cell provides the security input. This cell is referred to as the primary serving cell (PCell), and other cells are referred to as the secondary serving cells (SCells). Depending on capabilities of the communication device, SCells can be configured to form together with the PCell a set of serving cells under CA. In the downlink, the carrier corresponding to the PCell is the downlink primary component carrier (DL PCC), while in the uplink it is the uplink primary component carrier (UL PCC). A SCell needs to be configured by the network using RRC signaling before usage in order to provide necessary information, such as DL radio carrier frequency and physical cell identity (PCI) information, to the communication device. A SCell for which such necessary information has been provided to a communication device is referred to as configured cell for this communication device. The information available at the communication device after cell configuration is in particular sufficient for carrying out cell measurements. A configured SCell is in a deactivated state after cell configuration for energy saving. When a SCell is deactivated, the communication device does in particular not monitor/receive the physical dedicated control channel (PDCCH) or enhanced physical dedicated control channel (EPDCCH) or physical downlink shared channel (PDSCH) in the SCell. In other words, the communication device cannot communicate in a SCell after cell configuration, and the SCell needs to be activated before data transmission from/the communication device can be initiated in the SCell. LTE provides for a mechanism for activation and deactivation of SCells via media access control (MAC) control elements to the communication device.

Communication systems may be configured to support simultaneous communication with two or more access nodes. In LTE this mechanism is referred to as dual connectivity (DC).

More specifically, a communication device may be configured in LTE to communicate with a master eNB (MeNB) and a secondary eNB (SeNB). The MeNB may typically provide access to a macrocell, while the SeNB may provide on a different radio carrier access to a relatively small cell, such as a picocell. Only the MeNB maintains for the communication device in DC mode a connection via an S1-MME interface with the mobility management entity (MME), that is, only the MeNB is involved in mobility management procedures related to a communication device in DC mode. LTE supports two different user plane architectures for communication devices in DC mode. In the first architecture (split bearer) only the MeNB is connected via an S1-U interface to the serving gateway (S-GW) and the user plane data is transferred from the MeNB to the SeNB via an X2 interface. In the second architecture the SeNB is directly connected to the S-GW, and the MeNB is not involved in the transport of user plane data to the SeNB. DC in LTE reuses with respect to the radio interface concepts introduced for CA in LTE. A first group of cells, referred to as master cell group (MCG), can be provided for a communication device by the MeNB and may comprise one PCell and one or more SCells, and a second group of cells, referred to as seconday cell group (SCG), is provided by the SeNB and may comprise a primary SCell (PSCell) with functionality similar to the PCell in the MCG, for example with regard to uplink control signaling from the communication device. This second group of cells may further comprise one or more SCells.

Future networks, such as 5G, may progressively integrate data transmissions of different radio technologies in a communication between one or more access nodes and a communication device. Accordingly, communication devices may be able to operate simultaneously on more than one radio access technology, and carrier aggregation and dual connectivity may not be limited to the use of radio carriers of only one radio access technology. Rather, aggregation of radio carriers according to different radio access technologies and concurrent communication on such aggregated carriers may be supported.

Small cells, such as picocells, may progressively be deployed in future radio access networks to match the increasing demand for system capacity due to the growing population of communication devices and data applications. Integration of radio access technologies and/or a high number of small cells may bring about that a communication device may detect more and more cells in future networks, which are suitable candidates for connection establishment. Enhancements of carrier aggregation and dual connectivity mechanisms may be needed to make best use of these cells in future radio access networks. Such enhancements may allow for an aggregation of a high number of radio carriers at a communication device, for example up to 32 are currently specified in LTE Rel. 13, and in particular an integration of radio carriers operated on unlicensed spectrum.

Aggregation of radio carriers for communication to/from a communication device and simultaneous communication with two or more access nodes may in particular be used for operating cells on unlicensed (license exempt) spectrum. Wireless communication systems may be licensed to operate in particular spectrum bands. A technology, for example LTE, may operate, in addition to a licensed band, in an unlicensed band. LTE operation in the unlicensed spectrum may be based on the LTE Carrier Aggregation (CA) framework where one or more low power secondary cells (SCells) operate in the unlicensed spectrum and may be either downlink-only or contain both uplink (UL) and downlink (DL), and where the primary cell (PCell) operates in the licensed spectrum and can be either LTE Frequency Division Duplex (FDD) or LTE Time Division Duplex (TDD).

Two proposals for operating in unlicensed spectrum are LTE Licensed-Assisted Access (LAA) and LTE in Unlicensed Spectrum (LTE-U). LTE-LAA specified in 3GPP as part of Rel. 13 and LTE-U as defined by the LTE-U Forum may imply that a connection to a licensed band is maintained while using the unlicensed band. Moreover, the licensed and unlicensed bands may be operated together using, e.g., carrier aggregation or dual connectivity. For example, carrier aggregation between a primary cell (PCell) on a licensed band and one or more secondary cells (SCells) on unlicensed band may be applied, and uplink control information of the SCells is communicated in the PCell on licensed spectrum.

In an alternative proposal stand-alone operation using unlicensed carrier only may be used. In standalone operation at least some of the functions for access to cells on unlicensed spectrum and data transmission in these cells are performed without or with only minimum assistance or signaling support from license-based spectrum. Dual connectivity operation for unlicensed bands can be seen as an example of the scenario with minimum assistance or signaling from licensed-based spectrum.

Unlicensed band technologies may need to abide by certain rules, e.g. a clear channel assessment procedure, such as Listen-Before-Talk (LBT), in order to provide fair coexistence between LTE and other technologies such as Wi-Fi as well as between LTE operators. In some jurisdictions respective rules may be specified in regulations.

In LTE-LAA, before being permitted to transmit, a user or an access node (such as eNodeB) may, depending on rules or regulatory requirements, need to perform a Clear Channel Assessment (CCA) procedure, such a Listen-Before-Talk (LBT). The user or access node may, for example, monitor a given radio frequency, i.e. carrier, for a short period of time to ensure that the spectrum is not already occupied by some other transmission. The requirements for CCA procedures, such as LBT, vary depending on the geographic region: e.g. in the US such requirements do not exist, whereas in e.g. Europe and Japan the network elements operating on unlicensed bands need to comply with LBT requirements. Moreover, CCA procedures, such as LBT, may be needed in order to guarantee coexistence with other unlicensed band usage in order to enable e.g. fair co-existence with Wi-Fi also operating on the same spectrum and/or carriers. After a successful CCA procedure the user or access node is allowed to start transmission within a transmission opportunity. The maximum duration of the transmission opportunity may be preconfigured or may be signaled in the system, and may extend over a range of 4 to 13 milliseconds. The access node may be allowed to schedule downlink (DL) transmissions from the access node and uplink (UL) transmissions to the access node within a certain time window. An uplink transmission may not be subject to a CCA procedure, such as LBT, if the time between a DL transmission and a subsequent UL transmission is less than or equal to a predetermined value. Moreover, certain signaling rules, such as Short Control Signaling (SCS) rules defined for Europe by ETSI, may allow for the transmission of control or management information without LBT operation, if the duty cycle of the related signaling does not exceed a certain threshold, e.g. 5%, within a specified period of time, for example 50 ms. The aforementioned SCS rules, for example, can be used by compliant communication devices, referred to as operating in adaptive mode for respective SCS transmission of management and control frames without sensing the channel for the presence of other signals. The term "adaptive mode" is defined in ETSI as a mechanism by which equipment can adapt to its environment by identifying other transmissions present in a band, and addresses a general requirement for efficient operation of communications systems on unlicensed bands. Further, scheduled UL transmissions may in general be allowed without LBT, if the time between a DL transmission from an access node and a subsequent UL transmission is less than or equal to a predetermined value, and the access node has performed a clear channel assessment procedure, such as LBT, prior to the DL transmission. The total transmission time covering both DL transmission and subsequent UL transmission may be limited to a maximum burst or channel occupancy time. The maximum burst or occupancy time may be specified, for example, by a regulator.

Data transmission on an unlicensed band or/and subject to a clear channel assessment procedure cannot occur pursuant to a predetermined schedule in a communication system. Rather, communication devices and access nodes need to determine suitable time windows for uplink transmission and/or downlink transmission. A respective time window may comprise one or more transmission time intervals (TTI), such as subframes in LTE, and is in the following referred to as uplink transmission opportunity or downlink transmission opportunity. A TTI is the time period reserved in a scheduling algorithm for performing a data transmission of a dedicated data unit in the communication system. The determination of uplink transmission opportunities and/or downlink transmission opportunities may be based on parameters related to the communication system, such as a configured pattern governing the sequence of uplink and downlink transmissions in the system. The determination may further be based on rules or regulations specifying a minimum and/or maximum allowed length of uplink transmissions and/or downlink transmissions. The determination of uplink and downlink opportunities may in particular be based on the outcome of a clear channel assessment procedure, and communication devices or access nodes will only start data transmission on a frequency band after having assessed that the frequency band is clear, that is, not occupied by data transmissions from other communication devices or access nodes. Further rules or regulations may govern data transmissions in a communication between an access node and one or more communication devices. These rules may, for example, specify a maximum length of a time window in the communication covering at least one transmission in a first direction, for example in DL in a cellular system from an access node of a cell, and at least one subsequent transmission in the reverse direction, for example in UL from one or more communication devices in the cell. Such a time window comprising one or more DL and UL transmissions is in the following referred to as communication opportunity. DL transmissions may comprise scheduling information which may be transmitted on a DL control channel. The scheduling information may in particular be used for scheduling one or more UL data transmissions and/or one or more DL data transmissions within the current one or more future communication opportunities.

Scheduling information for a data transmission is indicative of an assignment of contents attributes, format attributes and mapping attributes to the data transmission. Mapping attributes relate to one or more channel elements allocated to the transmission on the physical layer. Specifics of the channel elements depend on the radio access technology and may depend on the used channel type. A channel element may relate to a group of resource elements, while each resource element relates to a frequency attribute, for example a subcarrier index (and the respective frequency range) in a system employing orthogonal frequency-division multiplexing (OFDM), and a time attribute, such as the transmission time of an OFDM or Single-Carrier FDMA symbol. A channel element may further relate to a code attribute, such as a cover code or a spreading code, which may allow for parallel data transmission on the same set of resource elements. Illustrative examples for channel elements in LTE are control channel elements (CCE) on the physical downlink control channel (PDCCH) or the enhanced physical downlink control channel (EPDCCH), PUCCH resources on the physical uplink control channel (PUCCH), and physical resource blocks (PRB) on the physical downlink shared channel (PDSCH) and the physical uplink shared channel (PUSCH). It should be understood that each data transmission is associated with the code attributes of the allocated channel elements and the frequency and time attributes of the resource elements in the allocated channel elements. Format attributes relate to the processing of a set of information bits in the transmission prior to the mapping to the allocated channel elements. Format attributes may in particular comprise a modulation and coding scheme used in the transmission and the length of the transport block in the transmission. Contents attributes relate to the user/payload information conveyed through the transmission. In other words, a contents attribute is any information, which may in an application finally affect the arrangement of a detected data sequence at the receiving end. Contents attributes may comprise the sender and/or the receiver of the transmission. Contents attributes may further relate to the information bits processed in the transmission, for example some kind of sequence number in a communication. Contents attributes may in particular indicate whether the transmission is a retransmission or relates to a new set of information bits. In case of a hybrid automatic repeat request (HARQ) scheme contents attributes may in particular comprise an indication of the HARQ process number, that is, a HARQ-specific sequence number, the redundancy version (RV) used in the transmission and a new data indicator (NDI).

Scheduling information for a data transmission need not comprise assignment information for the complete set of attributes needed in the data transmission. At least a part of the attributes can be preconfigured, for example through semi-persistent scheduling, and can be used in more than one data transmission. Some of the attributes may be signaled implicitly or may be derivable, for example from timing information. However, dynamic scheduling in a more complex system, such as a cellular mobile network, requires transmission of scheduling information on a DL control channel. In a system employing carrier aggregation the DL scheduling information related to a certain data transmission may be transmitted on a component carrier other than the data transmission. Transmission of a data and scheduling information on different component carriers is referred to as cross-carrier scheduling.

In a cell operated on unlicensed spectrum a communication device may start monitoring channel elements related to a DL control channel carrying scheduling information after detection of DL data burst or subframe in the cell. The detection of the DL data burst or subframe may be based on the detection of a certain signal in the cell, for example a reference signal, such as a cell reference signal which the communication device may blindly detect, or based on explicit signaling indicative of the presence of the DL data burst (such as common DCI). Monitoring channel elements related to a DL control channel may comprise blind detection of scheduling information destined to the communication device. The control channel may be a physical downlink control channel (PDCCH) or enhanced physical downlink control channel (EPDCCH) as specified in LTE or a similar channel. The communication device may further detect a DL data transmission on a data channel, such as a physical downlink shared channel (PDSCH) or a similar channel, based on the detected scheduling information.

A communication system may employ a retransmission mechanism, such as Automatic Repeat Request (ARQ), for handling transmission errors. A receiver in such a system may use an error-detection code, such as a Cyclic Redundancy Check (CRC), to verify whether a data packet was received in error. The receiver may notify the transmitter on a feedback channel of the outcome of the verification by sending an acknowledgement (ACK) if the data packet was correctly received or a non-acknowledgement (NACK) if an error was detected. The transmitter may subsequently transmit a new data packet related to other information bits, in case of an ACK, or retransmit the data packet received in error, in case of a NACK. The retransmission mechanism may be combined with forward error-correction coding (FEC), in which redundancy information is included in the data packet prior to transmission. This redundancy information can be used at the receiver for correcting at least some of the transmission errors, and retransmission of a data packet is only requested in case of uncorrectable errors. Such a combination of FEC and ARQ is referred to as hybrid automatic repeat request (HARQ). In a HARQ scheme the receiver may not simply discard a data packet with uncorrectable errors, but may combine obtained information with information from one or more retransmissions related to the same information bits. These retransmissions may contain identical copies of the first transmission. In more advanced schemes, such as incremental redundancy (IR) HARQ, the first transmission and related retransmissions are not identical. Rather, the various transmissions related to the same information bits may comprise different redundancy versions (RV), and each retransmission makes additional redundancy information available at the receiver for data detection. The number of transmissions related to the same information bits may be limited in a communication system by a maximum number of not successful transmissions, and a data packet related to new information bits may be transmitted once the maximum number of not successful transmissions has been reached. A scheduling grant may comprise a new data indicator (NDI) notifying a communication device whether the scheduled transmission is destined for a data packet related to new information bits. Further or alternatively, the scheduling grant may comprise an indication of the redundancy version (RV) used or to be used in the transmission. Each data packet, often referred to as transport block, may be transmitted in a communication system within a transmission time interval (TTI), such as a subframe in LTE. At least two transport blocks may be transmitted in parallel in a TTI when spatial multiplexing is employed. Processing of a transport block, its transmission and the processing and transmission of the corresponding HARQ-ACK feedback may take several TTIs. For example, in LTE-FDD such a complete HARQ loop takes eight subframes. Accordingly, eight HARQ processes are needed in a data stream in LTE-FDD for continuous transmission between an access node and a communication device. The HARQ processes are handled in the access nodes and the communication devices in parallel, and each HARQ process controls the transmission of transport blocks and ACK/NACK feedback related to a set of information bits in the data stream.

In a conventional LTE system HARQ-ACK feedback is communicated in UL according to a predefined timing in relation to the transmission time interval in which a transport block has been transmitted in DL. Specifically, HARQ-ACK feedback is transmitted by a communication device in subframe n for a DL transport block intended for the communication device and transmitted/detected on PDSCH (Physical Downlink Shared Channel) in subframe n-k. The minimum value for the HARQ-ACK delay k is four subframes in a conventional LTE system, which allows for sufficient time to receive and decode the DL transport block by a communication device, and for preparing the corresponding HARQ-ACK transmission in UL. In FDD mode, HARQ-ACK delay is fixed in 3GPP specification TS 36.213 to the minimum value of four subframes. In other words, when a transport block intended for a communication device is detected on PDSCH by the communication device in subframe n-4, the corresponding HARQ-ACK message is transmitted in subframe n by the communication device. In TDD mode, the HARQ-ACK delay k depends on the selected UL/DL configuration as well as the subframe number in which the transport block is transmitted on PDSCH. The relationship is given by means of the DL association set index K, shown in Table 1 and specified in 3GPP specification TS 36.213. In other words, when one or more transport blocks on PDSCH intended for a communication device are detected by the communication device within subframe(s) *n* - *k* (where *k* ∈ *K* and *K* as specified in Table 1), the corresponding HARQ-ACK message is transmitted in subframe n by the communication device.

**Table 1: Downlink association set index K: {k₀, k₁,Λ k_{M-1}} for LTE-TDD**

| **UL-DL Configuration** | **Subframe *n*** | | | | | | | | | |
|---|---|---|---|---|---|---|---|---|---|---|
| | 0 | 1 | 2 | 3 | 4 | 5 | 6 | 7 | 8 | 9 |
| 0 | - | - | 6 | - | 4 | - | - | 6 | - | 4 |
| 1 | - | - | 7, 6 | 4 | - | - | - | 7, 6 | 4 | - |
| 2 | - | - | 8, 7, 4, 6 | - | - | - | - | 8, 7, 4, 6 | - | - |
| 3 | - | - | 7, 6, 11 | 6, 5 | 5, 4 | - | - | - | - | - |
| 4 | - | - | 12, 8, 7, 11 | 6, 5, 4, 7 | - | - | - | - | - | - |
| 5 | - | - | 13, 12, 9, 8, 7, 5, 4, 11, 6 | - | - | - | - | - | - | - |
| 6 | - | - | 7 | 7 | 5 | - | - | 7 | 7 | - |

As discussed above, HARQ-ACK feedback is transmitted in a conventional LTE system by a communication device in subframe n for a DL transport block intended for the communication device and transmitted on PDSCH in subframe n-k. However, such a predetermined association between DL data transmissions and HARQ-ACK messages is not longer applicable (or at least such an approach cannot be the only solution to convey HARQ-ACK), due to LBT requirements and/or channel availability problems, when HARQ-ACK messages are communicated on unlicensed bands.

Signal transmissions on unlicensed spectrum may need to occupy effectively the whole of the nominal channel bandwidth, so as to ensure reliable operation with LBT. For example, the ETSI standards set strict requirements for the occupied channel bandwidth ("*According to ETSI regulation, the Occupied Channel Bandwidth, defined to be the bandwidth containing 99% of the power of the signal, shall be between 80% and 100% of the declared Nominal Channel Bandwidth*."). With a nominal channel bandwidth of a radio carrier of for example 20 MHz in a LTE-LAA system, this means that a transmission should have a bandwidth of at least 0.80 * 20 MHz = 16 MHz.

This means that UL transmissions such as PUCCH and PUSCH are required to occupy a large bandwidth, which is possible by using interleaved frequency division multiple access (IFDMA), block-IFDMA, or contiguous resource allocation.

Cell measurements and cell search may use a discovery signal measurements timing configuration (DMTC), similar to the DMTC specified in LTE for the detection of discovery reference signals (DRS) from dormant eNB, that is eNBs being in OFF state.

A eNB in LTE may transmit DRS at regular intervals, for example, to allow for UEs supporting the feature to discover and measure the dormant cell. In LTE, once the network is satisfied that there are no longer communication devices in the cell (after HO, connection release and redirecting RRC_IDLE mode communication devices to different frequency layers) it can make the final decision to turn off the cell and start a dormancy period. During the dormancy period, an eNB may transmit (e.g. periodically) DRS to allow for communication devices supporting the feature to discover and measure the dormant cell. At some point in time, the network can decide to turn the cell back, for example, based on communication device measurements.

The DRS in LTE consists of synchronization and reference signals introduced already in LTE Rel.8: PSS, SSS, and CRS. Additionally, CSI-RS standardized in Rel-10 can also be configured as part of DRS. The PSS/SSS/CRS facilitate cell discovery and RRM measurements similar to normal LTE operation while the CSI-RS allows for discovery of transmission points within the cell, enabling, for example, the so-called single-cell CoMP operation via RSRP measurements.

The DRS in LTE are transmitted with a more sparse periodicity for the purpose of cell detection and RRM measurements. One instance of DRS transmission is denoted as DRS Occasion. A DRS Occasion may have a duration of 1-5 subframes and includes PSS/SSS and CRS corresponding to antenna port 0 in the same time/frequency locations as in ordinary LTE operation. Additionally, a DRS Occasion may comprise of transmission of several CSI-RS resources, each typically corresponding to a transmission point.

A communication device may perform discovery measurements according to a discovery signal measurement timing configuration (DMTC), which may be defined per carrier. The DMTC indicates the time instances when the communication device may assume DRS to be present for a carrier, similar to measurement gap configurations used for inter-frequency RRM measurements. A DMTC occasion in LTE may have a fixed duration of around 6 ms and a configurable periodicity of, for example, 40, 80 or 160 ms. The network needs to ensure that the transmission times of DRS occasions of all cells on a given carrier frequency are aligned with the DMTC configuration in order to ensure those cells can be discovered.

A communication device may start transmitting in uplink during a transmission opportunity, such as a subframe in LTE, at a time TA (timing advance) before the arrival of a corresponding transmission from an access node in downlink. The time TA is selected such that signal transmissions from different communication devices reach the access node of a mobile network roughly at the same time, for example with a spread less than the cyclic prefix duration in a system employing orthogonal frequency-division multiplexing (OFDM), to prevent potential inter-symbol interference between signal transmissions from different communication devices.

In a mobile network, such as LTE, serving cells may be grouped to timing advance groups (TAG) consisting of one or more serving cells with the basically the same uplink timing advance (TA). I.e. the communication device applies same TA value on uplink transmissions to all serving cells in the same TAG. One of the cells in each TAG is used as timing reference cell (i.e. UE uses that cell's downlink as a timing reference). A TAG containing the PCell (pTAG) may use the PCell as timing reference cell, and a TAG containing only SCells (sTAG) uses one of the activated SCells in the TAG as timing reference cell. In LAA, in case the FS3 cells, i.e. a cell using frame structure 3 in LAA or eLAA, are in the pTAG, the PCell will be in the licensed band and in the licensed spectrum can be used as timing reference. Such a timing reference cell can be considered reliable, since the downlink (DL) synchronization and necessary reference signals are guaranteed to present with given predefined intervals. For sTAG containing only FS3 cells (or in MF, also pTAG with unlicensed PCell), the timing reference cell needs to be chosen among cells in unlicensed band, which leads to that the necessary synchronisation and reference signals cannot be guaranteed to be transmitted as in licensed band, and may be considered unreliable.

Due to CCA procedures, such as LBT, there will be occasions where an access node, such as an eNB in LTE, will not be able to get access to the air interface in unlicensed spectrum in a similar robust way as is known, for example, from LTE in licensed band, where an eNB transmits CRS in every subframe, and which can be used by communication devices to perform time tracking or any other procedures, such measurements, for RRM. However, if a CCA procedure, such as LBT applies, an access node (eNB) may try to transmit DRS in time invervals, suich as subframes in LTE, according to the DMTC, but if the CCA procedure determines the medium as busy, the access node (eNB) will refrain from transmitting in DL. In other words, the DRS may be missing for a long time. This will impact UE RRM activities which are relying on DRS.

For UE timing, UE may lose the DL timing due to missing DRS in DMTC (or any DL PSS/SSS/CRS (although unknown power level)) in an LBT cell, and this will cause unreliability. The DL timing will also impact UE's UL transmission because UL timing is derived from DL timing on the TA reference cell taking into account the TA, and UE should transmit UL only when it has reliable timing.

For serving cell measurement (already discussed in Rel-13 LAA) and RLM (already discussed in Multefire but not in 3GPP), it may take long delay for UE to evaluate the RSRP/RSRQ and radio quality of the serving cell. The evaluation or Layer 1 (L1) averaging may have to be aborted if there is long time without any DRS transmission.

It is clear that with CCA/LBT the robustness of the RRM framework will be degraded. Also handling of CCA/LBT may be different for different RRM activities which will create some complexity and uncertainty on system level.

In particular, the timing issue was discussed in RAN4#80bis meeting in October in R4-168023,
R4-168024 and R4-168296. Based on these papers and the discussion during the meeting, the following issues were left for further study (R4-168637):
*1:The definition of reliability and unreliability;*
*2: How many DL subframes need to be available for timing reference: relative or*
*3: What will happens and what UEs shall do if the reliable condition is not met?*
*4: How long is it, the time between UE last DL reception and UL transmission?*

In Rel-13 LAA (where only DL is supported), the cell detection and measurement requirements are defined as applicable only if the total detection and measurement time is smaller than a threshold.

L (see Table 1) is the number of configured discovery signal occasions which are not available during T_{identify_intra_FS3} for cell identification at the UE due to the absence of the necessary radio signals from the cell, M is the number of configured discovery signal occasions which are not available during T_{measure_intra_FS3_CRS} for the measurements at the UE due to the absence of the necessary radio signals from the cell. The requirements in this section apply, provided that L and M are such that: the intra-frequency cell identification period T_{identify_intra_FS3} does not exceed [72]*T_{DMTC_periodicity}, and the intra-frequency period T_{measure_intra_RS3_CRS} for measurements does not exceed [60]*T_{DMTC_periodicity.}

**Table 1: Intra-frequency cell identification requirement under operation with frame structure 3**

| **SCH Ês/lot** | **CRS measurement bandwidth [RB] _{Note2}** | **CRS Ês/lot** | **T_{identify_intra_FS3} [ms]** |
|---|---|---|---|
| [0] ≤ SCH Ês/lot | <25 | [-6] ≤ CRS Ês/lot | ([6]+L) * T_{DMTC_periodicity} |
| [-6] ≤ SCH Ês/lot < [0] | <25 | | ([24]+L) * T_{DMTC_periodicity} |
| [0] ≤ SCH Ês/lot | ≥ 25 | [0] ≤ CRS Ês/lot | ([2]+L) * T_{DMTC_periodicity} |
| [-6] ≤ SCH Ês/lot < [0] | ≥ 25 | | ([8]+L) * T_{DMTC_periodicity} |
| NOTE 1 : Discovery signal occasion duration (*ds-OccasionDuration*) is 1 ms. | | | |
| NOTE 2: The requirements for measurement bandwidth ≥25 RB are optional. | | | |

During the Rel-13 discussion, there were also proposals that the requirements apply when X% of DRS are transmitted during the detection and measurement time. Also proposed was detection and measurement are reset if Y seconds have passed since the last DRS transmission. Although there were discussions about the side condition of LAA requirements, those are not directly connected to the timing reliability issue.

All the solutions discussed so far are about UE behaviour conditioned on single cell DRS availability, and there is no discussion about the possibility of group RRM across a group of cells.

Document US 2017/238272 A1 describes a synchronization scheme in which a UE receives synchronization signal configuration information through a first cell, and subsequently receives a synchronization signal on a second cell configured in unlicensed band based on the configuration information received through the first cell.

Document EP 3018938 A1 describes a scheme for synchronization, cell discovery and data reception/transmission in LAA, in which control information received on a licensed carrier is used for adjusting the timing of data transmissions in an unlicensed carrier.

Document US 2014050206 A1 describes a scheme for transmission of a synchronization signal in a carrier aggregation system. According to this scheme synchronization signal configuration information is transmitted through a first cell and used in a second cell.

There is in particular a need for a more reliable determination of radio resource management information in cells of a mobile network using a suitable grouping of cells.

### Summary

In a first aspect, there is provided a method comprising receiving grouping information indicative of a group of cells comprising a first cell and one or more second cells, wherein a correlation measure between a signal attribute of a signal received in the first cell and a signal attribute of a signal received in the one or more second cells exceeds a predetermined or preconfigured threshold, determining radio resource management information for a radio resource management activity related to the first cell and causing transmission of the radio resource management information in the first cell, wherein the determining the radio resource management information comprises evaluating the signal of at least one of the second cells.

The signal of the at least one of the second cells may only be evaluated if the signal of the first cell is not received within a predetermined time interval.

The method may further comprise causing transmission of reliability information related to the radio resource management information, wherein the reliability information is based on the correlation measure.

The radio resource management information may be transmitted according to a predetermined or preconfigured performance requirement.

The method further comprises causing transmission of correlation indication information indicative of the correlation measure.

The determining of the radio resource management information may comprise searching for the signal of the first cell in time intervals according to a predetermined or preconfigured pattern.

The pattern may be specified by a discovery signal measurements configuration.

The signal of the first cell may be a discovery reference signal.

The transmission of the signal of the first cell may be subject to permission by a clear channel assessment procedure.

The radio resource management activity may be at least one of:
- determination of timing information related to a communication device,
- measurement of serving cell,
- radio link monitoring,
- measurement of neighbour cell,
- search for neighbour cell.

In a second aspect, there is provided a method comprising causing transmission of grouping information indicative of a group of cells comprising a first cell and one or more second cells, wherein a correlation measure between a signal attribute of a signal received in the first cell and a signal attribute of a signal received in the one or more second cells exceeds a predetermined or preconfigured threshold, receiving, from a communication device, radio resource management information for a radio resource management activity related to the first cell, wherein the signal of at least one of the second cells was evaluated at the communication device for determining the received radio resource management information.

The signal of the at least one of the second cells may only be evaluated if the signal of the first cell is not received within a predetermined time interval at the communication device.

The method may further comprise receiving, from the communication device, reliability information related to the radio resource management information, wherein the reliability information is based on a correlation measure.

The radio resource management information may be transmitted, by the communication device, according to a predetermined or preconfigured performance requirement.

The method further comprises receiving, from the communication device, correlation indication information indicative of the correlation measure.

The group may be formed according to a signal attribute, wherein a correlation measure between the signal attribute of the signal of the first cell and the signal attribute of the signal of the at least one of the second cells exceeds a predetermined or preconfigured threshold.

The signal attribute may be at least one of:
- signal strength,
- signal quality,
- signal timing.

The correlation measure may be determined based on at least one of:
- deployment information for a network area,
- measurement reports from communication devices in the network area.

The transmission of the signal of the first cell may be subject to permission by a clear channel assessment procedure.

The radio resource management activity may be at least one of:
- determination of timing information related to a communication device,
- measurement of serving cell,
- radio link monitoring,
- measurement of neighbour cell,
- search for neighbour cell.

In a third aspect, there is provided an apparatus, said apparatus comprising at least one processor; and at least one memory including computer program code, the at least one memory and the computer program code configured, with the at least one processor, to cause the apparatus at least to perform a method according to the first aspect.

In a forth aspect, there is provided an apparatus, said apparatus comprising at least one processor; and at least one memory including computer program code, the at least one memory and the computer program code configured, with the at least one processor, to cause the apparatus at least to perform a method according to the second aspect.

In a fifth aspect, there is provided an apparatus comprising means for performing a method according to embodiments of the first aspect.

In a sixth aspect, there is provided an apparatus comprising means for performing a method according to embodiments of the second aspect.

In a seventh aspect, there is provided a computer program embodied on a non-transitory computer-readable storage medium, the computer program comprising program code for controlling a process to execute a process, the process comprising receiving grouping information indicative of a group of cells comprising a first cell and one or more second cells, wherein a correlation measure between a signal attribute of a signal received in the first cell and a signal attribute of a signal received in the one or more second cells exceeds a predetermined or preconfigured threshold; determining radio resource management information for a radio resource management activity related to the first cell; causing transmission of the radio resource management information in the first cell; wherein the determining the radio resource management information comprises evaluating the signal of at least one of the second cells; and causing transmission of correlation indication information indicative of the correlation measure.

In an eighth aspect, there is provided a computer program embodied on a non-transitory computer-readable storage medium, the computer program comprising program code for controlling a process to execute a process, the process comprising causing transmission of grouping information indicative of a group of cells comprising a first cell and one or more second cells, wherein a correlation measure between a signal attribute of a signal received in the first cell and a signal attribute of a signal received in the one or more second cells exceeds a predetermined or preconfigured threshold; receiving, from a communication device, radio resource management information for a radio resource management activity related to the first cell; wherein the signal of at least one of the second cells was evaluated at the communication device for determining the received radio resource management information; and receiving, from the communication device, correlation indication information indicative of the correlation measure.

In a ninth aspect, there is provided a computer program product for a computer, comprising software code portions for performing the steps of a method according to embodiments of the first aspect.

In a tenth aspect, there is provided a computer program product for a computer, comprising software code portions for performing the steps of a method according to embodiments of the second aspect.

In an eleventh aspect, there is provided a mobile communication system comprising at least one apparatus according to the third aspect and at least one apparatus according to the forth aspect.

In a twelfth aspect, there is provided a mobile communication system comprising at least one apparatus according to the fifth aspect and at least one apparatus according to the sixth aspect.

In the above, many different embodiments have been described. It should be appreciated that further embodiments may be provided by the combination of any two or more of the embodiments described above.

### Description of Figures

Embodiments will now be described, by way of example only, with reference to the accompanying Figures in which:
Figure 1 shows a schematic diagram of an example communication system comprising a base station and a plurality of communication devices;
Figure 2 shows a schematic diagram of an example mobile communication device;
Figure 3 shows an example method of a mobile communication device for joint radio resource management (RRM) across a group of cells;
Figure 4 shows an example method of an access node for joint radio resource management (RRM) across a group of cells;
Figure 5 shows a schematic diagram of an example control apparatus;

### Detailed description

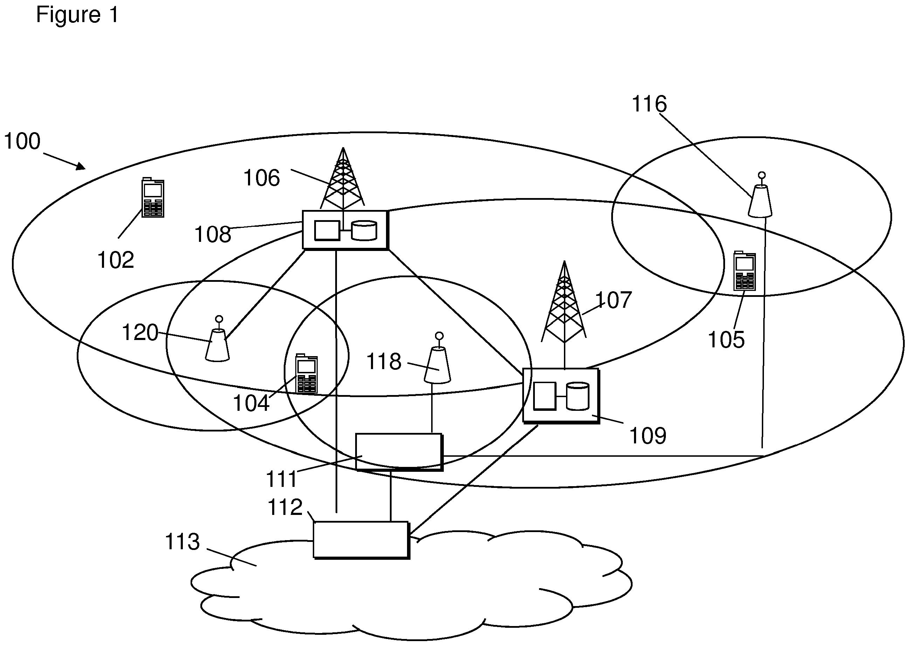

Before explaining in detail the examples, certain general principles of a wireless communication system and mobile communication devices are briefly explained with reference to Figures 1 to 2 to assist in understanding the technology underlying the described examples.

In a wireless communication system 100, such as that shown in figure 1, mobile communication devices or user equipment (UE) 102, 104, 105 are provided wireless access via at least one base station or similar wireless transmitting and/or receiving node or point. Base stations are typically controlled by at least one appropriate controller apparatus, so as to enable operation thereof and management of mobile communication devices in communication with the base stations. The controller apparatus may be located in a radio access network (e.g. wireless communication system 100) or in a core network (CN) (not shown) and may be implemented as one central apparatus or its functionality may be distributed over several apparatus. The controller apparatus may be part of the base station and/or provided by a separate entity such as a Radio Network Controller. In Figure 1 control apparatus 108 and 109 are shown to control the respective macro level base stations 106 and 107. The control apparatus of a base station can be interconnected with other control entities. The control apparatus is typically provided with memory capacity and at least one data processor. The control apparatus and functions may be distributed between a plurality of control units. In some systems, the control apparatus may additionally or alternatively be provided in a radio network controller.

LTE systems may however be considered to have a so-called "flat" architecture, without the provision of RNCs; rather the (e)NB is in communication with a system architecture evolution gateway (SAE-GW) and a mobility management entity (MME), which entities may also be pooled meaning that a plurality of these nodes may serve a plurality (set) of (e)NBs. Each UE is served by only one MME and/or S-GW at a time and the (e)NB keeps track of current association. SAE-GW is a "high-level" user plane core network element in LTE, which may consist of the S-GW and the P-GW (serving gateway and packet data network gateway, respectively). The functionalities of the S-GW and P-GW are separated and they are not required to be co-located.

In Figure 1 base stations 106 and 107 are shown as connected to a wider communications network 113 via gateway 112. A further gateway function may be provided to connect to another network.

The smaller base stations 116, 118 and 120 may also be connected to the network 113, for example by a separate gateway function and/or via the controllers of the macro level stations. The base stations 116, 118 and 120 may be pico or femto level base stations or the like. In the example, stations 116 and 118 are connected via a gateway 111 whilst station 120 connects via the controller apparatus 108. In some embodiments, the smaller stations may not be provided. Smaller base stations 116, 118 and 120 may be part of a second network, for example WLAN and may be WLAN APs.

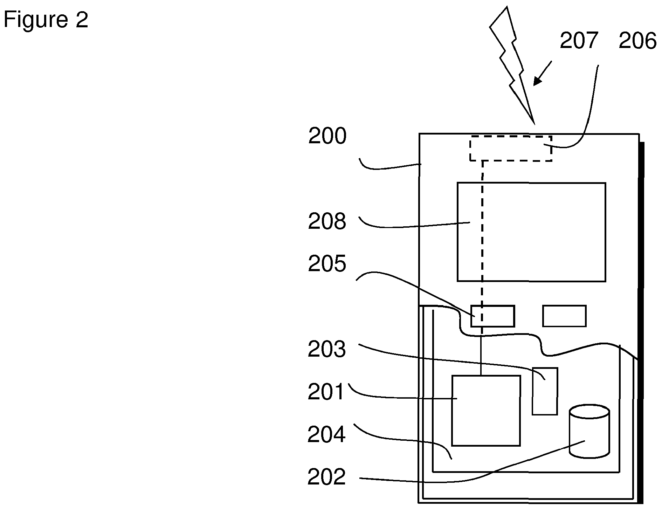

A possible mobile communication device will now be described in more detail with reference to Figure 2 showing a schematic, partially sectioned view of a communication device 200. Such a communication device is often referred to as user equipment (UE) or terminal. An appropriate mobile communication device may be provided by any device capable of sending and receiving radio signals. Non-limiting examples comprise a mobile station (MS) or mobile device such as a mobile phone or what is known as a 'smart phone', a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts and other information.

The mobile device 200 may receive signals over an air or radio interface 207 via appropriate apparatus for receiving and may transmit signals via appropriate apparatus for transmitting radio signals. In Figure 2 transceiver apparatus is designated schematically by block 206. The transceiver apparatus 206 may be provided for example by means of a radio part and associated antenna arrangement. The antenna arrangement may be arranged internally or externally to the mobile device.

A mobile device is typically provided with at least one data processing entity 201, at least one memory 202 and other possible components 203 for use in software and hardware aided execution of tasks it is designed to perform, including control of access to and communications with access systems and other communication devices. The data processing, storage and other relevant control apparatus can be provided on an appropriate circuit board and/or in chipsets. This feature is denoted by reference 204. The user may control the operation of the mobile device by means of a suitable user interface such as key pad 205, voice commands, touch sensitive screen or pad, combinations thereof or the like. A display 208, a speaker and a microphone can be also provided. Furthermore, a mobile communication device may comprise appropriate connectors (either wired or wireless) to other devices and/or for connecting external accessories, for example hands-free equipment, thereto.

The communication devices 102, 104, 105 may access the communication system based on various access techniques, such as code division multiple access (CDMA), or wideband CDMA (WCDMA). Other non-limiting examples comprise time division multiple access (TDMA), frequency division multiple access (FDMA) and various schemes thereof such as the interleaved frequency division multiple access (IFDMA), single carrier frequency division multiple access (SC-FDMA) and orthogonal frequency division multiple access (OFDMA), space division multiple access (SDMA) and so on. Signaling mechanisms and procedures, which may enable a device to address in-device coexistence (IDC) issues caused by multiple transceivers, may be provided with help from the LTE network. The multiple transceivers may be configured for providing radio access to different radio technologies.

An example of wireless communication systems are architectures standardized by the 3rd Generation Partnership Project (3GPP). A latest 3GPP based development is often referred to as the long term evolution (LTE) of the Universal Mobile Telecommunications System (UMTS) radio-access technology. The various development stages of the 3GPP specifications are referred to as releases. More recent developments of the LTE are often referred to as LTE Advanced (LTE-A). The LTE employs a mobile architecture known as the Evolved Universal Terrestrial Radio Access Network (E-UTRAN). Base stations of such systems are known as evolved or enhanced Node Bs (eNBs) and provide E-UTRAN features such as user plane Packet Data Convergence/Radio Link Control/Medium Access Control/Physical layer protocol (PDCP/RLC/MAC/PHY) and control plane Radio Resource Control (RRC) protocol terminations towards the communication devices. Other examples of radio access system comprise those provided by base stations of systems that are based on technologies such as wireless local area network (WLAN) and/or WiMax (Worldwide Interoperability for Microwave Access). A base station can provide coverage for an entire cell or similar radio service area.

As discussed above, there is a need for a more reliable determination of radio resource management information in cells of a mobile network using a suitable grouping of cells.

Such a scheme the determination of radio resource management information related to a first cell may comprise the evaluation of a signal of a second cell at a communication device in addition or instead of the evaluation of a signal of the first cell.

The beneficial effect of such a scheme is to be seen in that it allows for a more reliable and/or more regular transmission of radio resource management information related to the first cell from the communication device, when the transmission of the signal of the first cell or its detection at the communication device is uncertain. The transmission of the signal is, for example, uncertain if the transmission of the signal in the first cell is subject to the permission by a clear channel assessment procedure. In another example, the first cell may make opportunistic use of available radio resources and transmit the signal, such as a certain discovery or control signal, only if no other information needs to be transmitted in the first cell. Detection uncertainty may in particular occur, if radio and interference conditions vary significantly within short time on a downlink channel. The evaluation results of signals in one or more second cells of the group can in such scenarios be used to replace the evaluation result of the signal in the first cell or to improve the radio resource management information by an additional evaluation of signals in one or more second cells. The scheme may comprise an appropriate combining of evaluation results from different cells of the group.

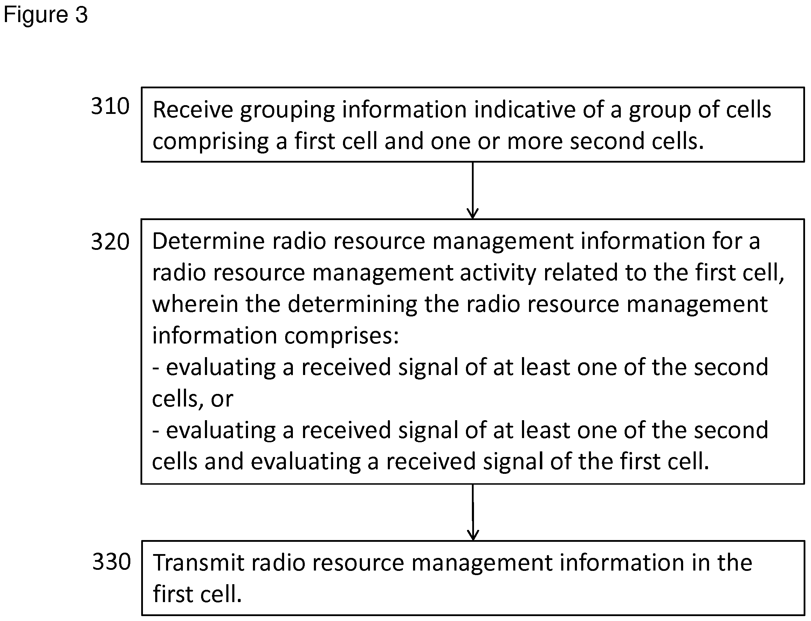

Figure 3 shows an example method a mobile communication device for joint radio resource management (RRM) across a group of cells.

At step 310, the communication device receives grouping information indicative of a group of cell comprising a first cell and one or more second cell, wherein a correlation measure between a signal attribute of a signal received in the first cell and a signal attribute of a signal received in the one or more second cells exceeds a predetermined or preconfigured threshold. The grouping information may be received from an access node of the first cell. Alternatively or additionally, the grouping information may comprise measurement results obtained by the communication device. The method proceeds to step 320.

At step 320, the communication device determines radio resource management information for a radio resource management activity related to the first cell, wherein the determining the radio resource management information comprises evaluating of a received signal of at least one of the second cells, or evaluating of a received signal of at least one of the second cells in addition to evaluating a received signal of the first cell. The radio resource management information may comprise information such as measurement results of signals obtained at the communication device, detection results for reference signals and/or control signals from detected cells, and timing information related to detected cells. The method proceeds to step 330.

At step 330, the communication device transmits the radio resource management information in the first cell. The radio resource management information may additionally be transmitted in one or more of the second cells in the group. In other words, radio resource management information may not only be used in a single cell, as in a conventional network, but may be provided to and used in a group of suitably selected cells.

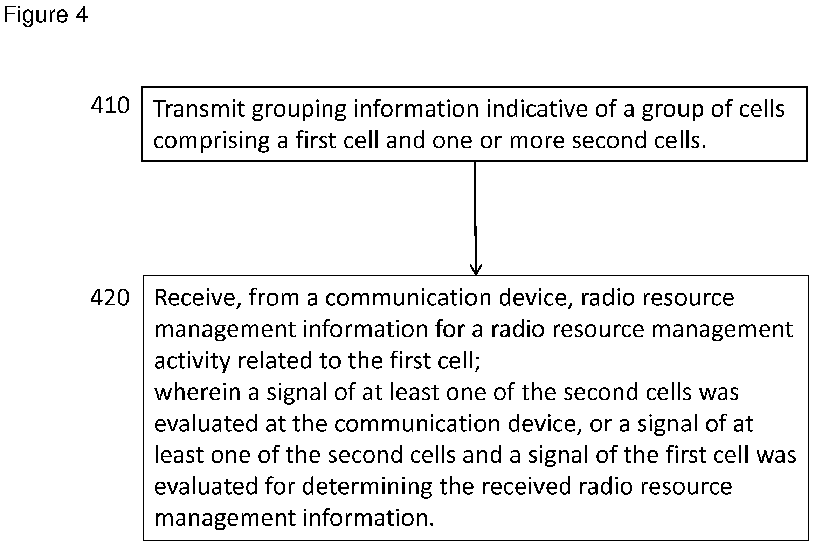

Figure 4 shows shows an example method of an access node for joint radio resource management (RRM) across a group of.

At step 410, the access node transmits grouping information indicative of a group of cells comprising a first cell and one or more second cells, wherein a correlation measure between a signal attribute of a signal received in the first cell and a signal attribute of a signal received in the one or more second cells exceeds a predetermined or preconfigured threshold.

At step 420, the access node receives from a communication device radio resource management information for a radio resource management activity related to the first cell, wherein a signal of at least one of the second cells was evaluated at the communication device, or a signal of at least one of the second cells was evaluated at the communication device in addition to a signal of the first cell for determining the received radio resource management information.

In step 320 the received signal of the at least one of the second cells may only be evaluated if the signal of the first cell is not received within a predetermined time interval. This time interval may comprise one or more transmission opportunities of the signal in the first cell. This transmission opportunities may occur according to a predetermined or preconfigured schedule.

In step 330 the communication device may transmit reliability information related to the radio resource management information, wherein the reliability information is based on a correlation measure between evaluation results of the received signal of the first cell and evaluation results of the received signal of the at least one of the second cells. This reliability information may be based on deployment information or, alternatively or additionally, based on measurement results obtained at the communication device. If the radio resource management information related to at least two transmission opportunities, the reliability information may further be based on the number of detected transmissions of the received signal of the first cell and the number of detected transmission of the received signal of the at least one second cell. The reliability information may further be based on signal strength or signal quality measures of the detected signals. The reliability information may be received by the access node in step 420. This information may be used in the network for some kind of filtering or evaluation of radio resource management information before the network generates control information for the radio resource management in a cell.

The communication device may transmit the radio resource management information in step 330 according to a predetermined or preconfigured performance requirement. Such a performance requirement related to the timing of the communication device (UE) may for example read: "UE shall be able to maintain reliable timing if there are [X] DRS transmissions in the group in the last [Y] ms, where the X DRS may come from a single or multiple cells, where X and Y are predetermined or preconfigured numbers". In an embodiment the communication device (UE) may perform the following steps:
1. UE measures all cells for a defined time period and chooses a reliable cell for TA reference cell (reliable cell may be a cell where UE can acquire timing during the measurement period, or the definition of reliability can be defined separately for example related to availability of DL signals in the cell).
2. UE continues to measure all cells.
3. If there is no transmission in the reference cell, the UE immediately uses any other cell with transmission as a timing reference.
4. If there is no transmission in any cell in the TAG in a specified time period (the condition of unreliability is met), the TAG is stopped.

Another example for serving cell measurement or RLM could be a simple update to the existing specification (TS 36.133) as highlight: "L is the number of configured discovery signal occasions which are not available on any cell in the group during Tidentify_intra_Fs3 for cell identification at the UE due to the absence of the necessary radio signals from the cell".

The communication device further transmits in step 330 correlation indication information indicative of the correlation measure between evaluation results of the received signal of the first cell and evaluation results of the received signal of the at least one of the second cells. This information is received by the access node in step 420. This information is used in the network for maintaining the group information. The information is further used in the network for combining radio resource management information from different cells of the group.

The determining of the radio resource management information in step 320 may comprises searching for the signal of the first cell, such as a reference signal or a control signal, in time intervals according to a predetermined or preconfigured pattern. This pattern may be specified by a discovery signal measurements configuration (DMTC). The signal of the first cell may be a discovery reference signal.

The transmission of the signal of the first cell may be subject to permission by a clear channel assessment procedure. That is, the signal may only be transmitted in downlink by the access point when the access point determines, for example by performing LBT, that respective radio resources are not occupied by another sender.

The radio resource management activity in the methods of Figures 3 and 4 is at least one of:
- determination of timing information related to a communication device,
- measurement of serving cell,
- radio link monitoring,
- measurement of neighbour cell,
- search for neighbour cell.

The groups of cells in step 410 may be formed according to a signal attribute, wherein a correlation measure between the signal attribute of the signal of the first cell and the signal attribute of the signal of the at least one of the second cells exceeds a predetermined or preconfigured threshold. In other words, the groups are formed such, that certain attributes of signals in the cells are similar in all cells, or at least representative for the other cells in the group. Therefore, a communication device may assume that, for example, differences in terms of timing of the signals or radio conditions among cells of the same group are negligible or can at least be estimated/predicted/derived from evaluation results obtained for signals of cells in the same group. The signal attribute may comprise attributes such as the signal strength, the signal quality and the signal timing. The correlation measure may be determined based on information, such as deployment information for a network area, and measurement reports from communication devices in the network area.

In an embodiment the system performs the following method:
1. Network sets up the group based on deployment.
2. UE performs joint RRM across multiple cells in the group, and complies with corresponding performance requirements.

In an embodiment the grouping may be based on deployment information. The network may, for example, divide multiple serving cells (including PCell and SCell) of a single UE into several groups. These group may be TA groups, or groups independent from the timing advance.

In an embodiment, when performing RRM, the UE may take samples or DRS from multiple serving cells in the same group for evaluation or averaging on Layer 1.

For example, for UE timing, DRS transmission on any cell in the group may be used by the UE to track the group timing. The UE may not be limited to using all DRS transmissions on all cells, in case where there are sufficient DRS from one or a subset of cells in the group. More specifically, two options may be considered
I. There is no single reference cell, but the UE keeps track of the timing from any cell where it can receive in DL, and the UE timing will be derived from the group timing.
II. The group has a TA reference cell, but in case there is no transmission in this cell, UE immediately uses the timing of another cell, which has transmission.

In another example, for serving cell measurement and RLM, DRS transmission on any cell in the group may be used by the UE to estimate the group radio condition. But the UE may not be limited to using all DRS transmissions on all cells, in case where there are sufficient DRS from one or a subset of cells in the group.

In an embodiment, based on measurement results, the UE may derive reliability information regarding a correlation measure between cells in the group seen from the UE side. This information may be included in the measurement reports, to facilitate network to maintain the grouping. In an embodiment the information may be also used by the UE to autonomously exclude certain cells from the joint RRM activities e.g. if the measurement of the cell is significantly different from the average.

The TA of a group may be stopped when there is no transmission in any of the cells for a specified time period. Accordingly, the serving cell measurement may be aborted when there is no transmission in any of the cells for a specified time period.

In an embodiment a radio link failure (RLF) may be triggered when there is no transmission in any of the cells for a specified time period.

In an embodiment the grouping of cells may in general be a network implementation issue. One simple approach to form and maintain the grouping may be to rely on deployment information. The networks know which cells are transmitted from the same physical site so that the timing and radio condition of these cells would be sufficiently correlated with each other. In a similar way the network may form a TA group. In another embodiment the network may rely, at least partly, on UE reporting for forming and maintain the grouping. The UE could may report some correlation information to indicate to the network how similar the cells are from UE side, and the network may update the grouping based on such reports.

In many cases a large bandwidth, i.e. a large number of carriers, will be supported by a single cell site in unlicensed spectrum. Therefore, these cells may be co-located in the same site, so that they can be considered to have same timing and radio condition, and thus can be in assigned to the same group.

In an embodiment the UE is not limited to using all DRS transmissions on all cells when there are sufficient DRS from one or a subset of cells in the group. In order to ensure UE will perform joint RRM by using DRS from multiple cells, minimum performance requirements may be defined.

It should be understood that each block of the flowchart of the Figures and any combination thereof may be implemented by various means or their combinations, such as hardware, software, firmware, one or more processors and/or circuitry.

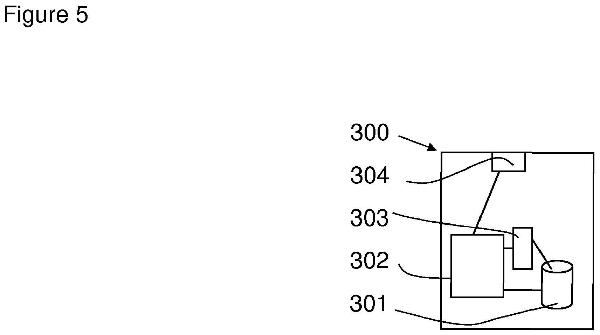

The method may be implemented on a mobile device as described with respect to Figure 2 or control apparatus as shown in Figure 5. Figure 5 shows an example of a control apparatus for a communication system, for example to be coupled to and/or for controlling a station of an access system, such as a RAN node, e.g. a base station, (e) node B or 5G AP, a central unit of a cloud architecture or a node of a core network such as an MME or S-GW, a scheduling entity, or a server or host. The method may be implanted in a single control apparatus or across more than one control apparatus. The control apparatus may be integrated with or external to a node or module of a core network or RAN. In some embodiments, base stations comprise a separate control apparatus unit or module. In other embodiments, the control apparatus can be another network element such as a radio network controller or a spectrum controller. In some embodiments, each base station may have such a control apparatus as well as a control apparatus being provided in a radio network controller. The control apparatus 300 can be arranged to provide control on communications in the service area of the system. The control apparatus 300 comprises at least one memory 301, at least one data processing unit 302, 303 and an input/output interface 304. Via the interface the control apparatus can be coupled to a receiver and a transmitter of the base station. The receiver and/or the transmitter may be implemented as a radio front end or a remote radio head. For example the control apparatus 300 can be configured to execute an appropriate software code to provide the control functions. Control functions may comprise providing configuration information for the grouping of cells and joint multi-cell radio resource management (RRM).

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst embodiments have been described in relation to LTE networks, similar principles may be applied in relation to other networks and communication systems, for example, 5G networks. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

In general, the various embodiments may be implemented in hardware or special purpose circuits, software, logic or any combination thereof. Some aspects of the invention may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments of this invention may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

## Claims

1. An apparatus (200) comprising:
at least one processor (201); and
at least one memory (202) including computer program code, the at least one memory (202) and the computer program code configured, with the at least one processor (201), to cause the apparatus (200) to perform at least the following:
receive grouping information indicative of a group of cells comprising a first cell and one or more second cells, wherein a correlation measure between a signal attribute of a signal received in the first cell and a signal attribute of a signal received in the one or more second cells exceeds a predetermined or preconfigured threshold;
determine radio resource management information for a radio resource management activity related to the first cell;
cause transmission of the radio resource management information in the first cell;
wherein the determining the radio resource management information comprises evaluating the signal of the at least one of the second cells; the apparatus being **characterized by** causing
transmission of correlation indication information indicative of the correlation measure.

2. An apparatus according to claim 1, wherein the signal of the at least one of the second cells is only evaluated if the signal of the first cell is not received within a predetermined time interval.

3. An apparatus according to any one of claims 1 to 2, and the at least one memory and the computer program code configured, with the at least one processor, to cause the apparatus further to cause transmission of reliability information related to the radio resource management information, wherein the reliability information is based on the correlation measure.

4. An apparatus according to any one of claims 1 to 3, wherein the radio resource management information is transmitted according to a predetermined or preconfigured performance requirement.

5. An apparatus according to any one of claims 1 to 4, wherein the determining of the radio resource management information comprises searching for the signal of the first cell in time intervals according to a predetermined or preconfigured pattern.

6. An apparatus according to claim 5, wherein the pattern is specified by a discovery signal measurements configuration.

7. An apparatus according to any one of claims 1 to 6, wherein the signal of the first cell is a discovery reference signal.

8. An apparatus according to any one of claims 1 to 7, wherein transmission of the signal of the first cell is subject to permission by a clear channel assessment procedure.

9. An apparatus according to any one of claims 1 to 8, wherein the radio resource management activity is at least one of:
- determination of timing information related to a communication device,
- measurement of serving cell,
- radio link monitoring,
- measurement of neighbour cell,
- search for neighbour cell.

10. An apparatus (300) comprising:
at least one processor (302, 303); and
at least one memory (301) including computer program code, the at least one memory (301) and the computer program code configured, with the at least one processor (302, 303), to cause the apparatus (300) to perform at least the following:
cause transmission of grouping information indicative of a group of cells comprising a first cell and one or more second cells, wherein a correlation measure between a signal attribute of a signal received in the first cell and a signal attribute of a signal received in the one or more second cells exceeds a predetermined or preconfigured threshold;
receive, from a communication device, radio resource management information for a radio resource management activity related to the first cell;
wherein the signal of at least one of the second cells was evaluated at the communication device for determining the received radio resource management inform ation; the apparatus being **characterized by** receiving,
from the communication device, correlation indication information indicative of the correlation measure.

11. An apparatus according to claim 10, wherein the signal of the at least one of the second cells is only evaluated if the signal of the first cell is not received within a predetermined time interval at the communication device.

12. A method comprising:
receiving grouping information indicative of a group of cells comprising a first cell and one or more second cells, wherein a correlation measure between a signal attribute of a signal received in the first cell and a signal attribute of a signal received in the one or more second cells exceeds a predetermined or preconfigured threshold;
determining radio resource management information for a radio resource management activity related to the first cell;
causing transmission of the radio resource management information in the first cell;
wherein the determining the radio resource management information comprises evaluating the signal of at least one of the second cells; the method being **characterized by**
causing transmission of correlation indication information indicative of the correlation measure.

13. A method comprising:
causing transmission of grouping information indicative of a group of cells comprising a first cell and one or more second cells, wherein a correlation measure between a signal attribute of a signal received in the first cell and a signal attribute of a signal received in the one or more second cells exceeds a predetermined or preconfigured threshold;
receiving, from a communication device, radio resource management information for a radio resource management activity related to the first cell;
wherein the signal of at least one of the second cells was evaluated at the communication device for determining the received radio resource management information; the method being **characterized by**
receiving, from the communication device, correlation indication information indicative of the correlation measure.

14. A computer program product for a computer, comprising software code portions for performing the steps of claim 12 or 13 when said product is run on the computer.

## Patentansprüche

1. Einrichtung (200), die Folgendes umfasst:
mindestens einen Prozessor (201); und
mindestens einen Speicher (202), der einen Computerprogrammcode beinhaltet, wobei der mindestens eine Speicher (202) und der Computerprogrammcode dazu ausgelegt sind, die Einrichtung (200) mit dem mindestens einen Prozessor (201) zu veranlassen, mindestens Folgendes durchzuführen:
Empfangen von Gruppierungsinformationen, die eine Gruppe von Zellen anzeigen, die eine erste Zelle und eine oder mehrere zweite Zellen umfassen, wobei ein Korrelationsmaß zwischen einem Signalattribut eines Signals, das in der ersten Zelle empfangen wird, und einem Signalattribut eines Signals, das in der einen oder den mehreren zweiten Zellen empfangen wird, einen vorbestimmten oder vorausgelegten Schwellwert überschreitet;
Bestimmen von Funkressourcenverwaltungsinformationen für eine Funkressourcenverwaltungsaktivität, die sich auf die erste Zelle bezieht;
Veranlassen einer Übertragung der Funkressourcenverwaltungsinformationen in der ersten Zelle;
wobei das Bestimmen der Funkressourcenverwaltungsinformationen das Beurteilen des Signals der mindestens einen der zweiten Zellen umfasst; wobei die Einrichtung durch Veranlassen von Folgendem gekennzeichnet ist
Übertragung von Korrelationsanzeigeinformationen, die das Korrelationsmaß anzeigen.

2. Einrichtung nach Anspruch 1, wobei das Signal der mindestens einen der zweiten Zellen nur beurteilt wird, wenn das Signal der ersten Zelle nicht innerhalb eines vorbestimmten Zeitintervalls empfangen wird.

3. Einrichtung nach einem der Ansprüche 1 bis 2, und wobei der Speicher und der Computerprogrammcode dazu ausgelegt sind, die Einrichtung mit dem mindestens einen Prozessor ferner zu veranlassen, eine Übertragung von Zuverlässigkeitsinformationen, die sich auf die Funkressourcenverwaltungsinformationen beziehen, zu veranlassen, wobei die Zuverlässigkeitsinformationen auf dem Korrelationsmaß basieren.

4. Einrichtung nach einem der Ansprüche 1 bis 3, wobei die Funkressourcenverwaltungsinformationen gemäß einer vorbestimmten oder vorausgelegten Leistungsanforderung übertragen werden.

5. Einrichtung nach einem der Ansprüche 1 bis 4, wobei das Bestimmen der Funkressourcenverwaltungsinformationen das Suchen nach dem Signal der ersten Zelle in Zeitintervallen gemäß einem vorbestimmten oder vorausgelegten Muster umfasst.

6. Einrichtung nach Anspruch 5, wobei das Muster durch eine Entdeckungssignalmessauslegung spezifiziert wird.

7. Einrichtung nach einem der Ansprüche 1 bis 6, wobei das Signal der ersten Zelle ein Entdeckungsreferenzsignal ist.

8. Einrichtung nach einem der Ansprüche 1 bis 7, wobei eine Übertragung des Signals der ersten Zelle einer Genehmigung durch eine Freikanalbeurteilungsprozedur unterliegt.

9. Einrichtung nach einem der Ansprüche 1 bis 8, wobei die Funkressourcenverwaltungsaktivität mindestens eines von Folgendem ist:
- Bestimmung von Timinginformationen, die sich auf eine Kommunikationsvorrichtung beziehen,
- Messung von bedienenden Zellen,
- Funkverbindungsüberwachung,
- Messung einer Nachbarzelle,
- Suche nach einer Nachbarzelle.

10. Einrichtung (300), die Folgendes umfasst:
mindestens einen Prozessor (302, 303); und
mindestens einen Speicher (301), der einen Computerprogrammcode beinhaltet, wobei der mindestens eine Speicher (301) und der Computerprogrammcode dazu ausgelegt sind, die Einrichtung (300) mit dem mindestens einen Prozessor (302, 303) zu veranlassen, mindestens Folgendes durchzuführen:
Veranlassen einer Übertragung von Gruppierungsinformationen, die eine Gruppe von Zellen anzeigen, die eine erste Zelle und eine oder mehrere zweite Zellen umfassen, wobei ein Korrelationsmaß zwischen einem Signalattribut eines Signals, das in der ersten Zelle empfangen wird, und einem Signalattribut eines Signals, das in der einen oder den mehreren zweiten Zellen empfangen wird, einen vorbestimmten oder vorausgelegten Schwellwert überschreitet;
Empfangen von Funkressourcenverwaltungsinformationen für eine Funkressourcenverwaltungsaktivität, die sich auf die erste Zelle bezieht, von einer Kommunikationsvorrichtung;
wobei das Signal von mindestens einer der zweiten Zellen an der Kommunikationsvorrichtung zum Bestimmen der empfangenen Funkressourcenverwaltungsinformationen beurteilt wurde; wobei die Einrichtung durch Empfangen von Folgendem gekennzeichnet ist,
Korrelationsanzeigeinformationen, die das Korrelationsmaß anzeigen, von der Kommunikationsvorrichtung.

11. Einrichtung nach Anspruch 10, wobei das Signal der mindestens einen der zweiten Zellen nur beurteilt wird, wenn das Signal der ersten Zelle nicht innerhalb eines vorbestimmten Zeitintervalls an der Kommunikationsvorrichtung empfangen wird.

12. Verfahren, das Folgendes umfasst:
Empfangen von Gruppierungsinformationen, die eine Gruppe von Zellen anzeigen, die eine erste Zelle und eine oder mehrere zweite Zellen umfassen, wobei ein Korrelationsmaß zwischen einem Signalattribut eines Signals, das in der ersten Zelle empfangen wird, und einem Signalattribut eines Signals, das in der einen oder den mehreren zweiten Zellen empfangen wird, einen vorbestimmten oder vorausgelegten Schwellwert überschreitet;
Bestimmen von Funkressourcenverwaltungsinformationen für eine Funkressourcenverwaltungsaktivität, die sich auf die erste Zelle bezieht;
Veranlassen einer Übertragung der Funkressourcenverwaltungsinformationen in der ersten Zelle;
wobei das Bestimmen der Funkressourcenverwaltungsinformationen das Beurteilen des Signals von mindestens einer der zweiten Zellen umfasst; wobei das Verfahren durch Folgendes gekennzeichnet ist
Veranlassen einer Übertragung von Korrelationsanzeigeinformationen, die das Korrelationsmaß anzeigen.

13. Verfahren, das Folgendes umfasst:
Veranlassen einer Übertragung von Gruppierungsinformationen, die eine Gruppe von Zellen anzeigen, die eine erste Zelle und eine oder mehrere zweite Zellen umfassen, wobei ein Korrelationsmaß zwischen einem Signalattribut eines Signals, das in der ersten Zelle empfangen wird, und einem Signalattribut eines Signals, das in der einen oder den mehreren zweiten Zellen empfangen wird, einen vorbestimmten oder vorausgelegten Schwellwert überschreitet;
Empfangen von Funkressourcenverwaltungsinformationen für eine Funkressourcenverwaltungsaktivität, die sich auf die erste Zelle bezieht, von einer Kommunikationsvorrichtung;
wobei das Signal von mindestens einer der zweiten Zellen an der Kommunikationsvorrichtung zum Bestimmen der empfangenen Funkressourcenverwaltungsinformationen beurteilt wurde; wobei das Verfahren durch Folgendes gekennzeichnet ist
Empfangen von Korrelationsanzeigeinformationen, die das Korrelationsmaß anzeigen, von der Kommunikationsvorrichtung.

14. Computerprogrammprodukt für einen Computer, das Softwarecodeabschnitte zum Durchführen der Schritte von Anspruch 12 oder 13, wenn das Produkt auf dem Computer läuft, umfasst.

## Revendications

1. Appareil (200) comprenant :
au moins un processeur (201) ; et
au moins une mémoire (202) comportant un code de programme informatique, l'au moins une mémoire (202) et le code de programme informatique étant configurés, avec l'au moins un processeur (201), pour amener l'appareil (200) à effectuer au moins ce qui suit :
recevoir des informations de regroupement indiquant un groupe de cellules comprenant une première cellule et une ou plusieurs deuxièmes cellules, dans lequel une mesure de corrélation entre un attribut de signal d'un signal reçu dans la première cellule et un attribut de signal d'un signal reçu dans les un une ou plusieurs deuxièmes cellules dépasse un seuil prédéterminé ou préconfiguré ;
déterminer des informations de gestion de ressources radio pour une activité de gestion de ressources radio liée à la première cellule ;
provoquer la transmission des informations de gestion de ressources radio dans la première cellule ;
dans lequel la détermination des informations de gestion de ressources radio comprend l'évaluation du signal de l'au moins une deuxièmes cellule ; l'appareil étant **caractérisé en ce qu'**il provoque la transmission d'informations d'indication de corrélation indiquant la mesure de corrélation.

2. Appareil selon la revendication 1, dans lequel le signal de l'au moins une deuxièmes cellule n'est évalué que si le signal de la première cellule n'est pas reçu dans un intervalle de temps prédéterminé.

3. Appareil selon l'une des revendications 1 et 2, où l'au moins une mémoire et le code de programme informatique sont configurés, avec l'au moins un processeur, pour amener l'appareil à provoquer en outre la transmission d'informations de fiabilité liées aux informations de gestion de ressources radio, dans lequel les informations de fiabilité sont basées sur la mesure de corrélation.

4. Appareil selon l'une des revendications 1 à 3, dans lequel les informations de gestion de ressources radio sont transmises selon une exigence de performance prédéterminée ou préconfigurée.

5. Appareil selon l'une des revendications 1 à 4, dans lequel la détermination des informations de gestion de ressources radio comprend la recherche du signal de la première cellule dans des intervalles de temps selon un schéma prédéterminé ou préconfiguré.

6. Appareil selon la revendication 5, dans lequel le schéma est spécifié par une configuration de mesures de signal de découverte.

7. Appareil selon l'une des revendications 1 à 6, dans lequel le signal de la première cellule est un signal de référence de découverte.

8. Appareil selon l'une des revendications 1 à 7, dans lequel la transmission du signal de la première cellule est soumise à l'autorisation d'une procédure d'appréciation de clarté de canal.

9. Appareil selon l'une des revendications 1 à 8, dans lequel l'activité de gestion de ressources radio est au moins l'une parmi :
- la détermination d'informations temporelles relatives à un dispositif de communication,
- la mesure d'une cellule de desserte,
- la surveillance d'une liaison radio,
- la mesure d'une cellule voisine,
- la recherche d'une cellule voisine.

10. Appareil (300) comprenant :
au moins un processeur (302, 303) ; et
au moins une mémoire (301) comportant un code de programme informatique, l'au moins une mémoire (301) et le code de programme informatique étant configurés, avec l'au moins un processeur (302, 303), pour amener l'appareil (300) à effectuer au moins ce qui suit :
provoquer la transmission d'informations de regroupement indiquant un groupe de cellules comprenant une première cellule et une ou plusieurs deuxièmes cellules, dans lequel une mesure de corrélation entre un attribut de signal d'un signal reçu dans la première cellule et un attribut de signal d'un signal reçu dans les un une ou plusieurs deuxièmes cellules dépasse un seuil prédéterminé ou préconfiguré ;
recevoir, d'un dispositif de communication, des informations de gestion de ressources radio pour une activité de gestion de ressources radio liée à la première cellule ;
dans lequel le signal d'au moins une deuxièmes cellule a été évalué au niveau du dispositif de communication pour déterminer les informations de gestion de ressources radio reçues ; l'appareil étant **caractérisé en ce qu'**il reçoit du dispositif de communication des informations d'indication de corrélation indiquant la mesure de corrélation.

11. Appareil selon la revendication 10, dans lequel le signal de l'au moins une deuxièmes cellule n'est évalué que si le signal de la première cellule n'est pas reçu dans un intervalle de temps prédéterminé au niveau du dispositif de communication.

12. Procédé comprenant :
la réception d'informations de regroupement indiquant un groupe de cellules comprenant une première cellule et une ou plusieurs deuxièmes cellules, dans lequel une mesure de corrélation entre un attribut de signal d'un signal reçu dans la première cellule et un attribut de signal d'un signal reçu dans les un une ou plusieurs deuxièmes cellules dépasse un seuil prédéterminé ou préconfiguré ;
la détermination d'informations de gestion de ressources radio pour une activité de gestion de ressources radio liée à la première cellule ;
la provocation de la transmission des informations de gestion de ressources radio dans la première cellule ;
dans lequel la détermination des informations de gestion de ressources radio comprend l'évaluation du signal d'au moins une deuxièmes cellule ; le procédé étant **caractérisé en ce qu'**il provoque la transmission d'informations d'indication de corrélation indiquant la mesure de corrélation.

13. Procédé comprenant :
la provocation de la transmission d'informations de regroupement indiquant un groupe de cellules comprenant une première cellule et une ou plusieurs deuxièmes cellules, dans lequel une mesure de corrélation entre un attribut de signal d'un signal reçu dans la première cellule et un attribut de signal d'un signal reçu dans les un une ou plusieurs deuxièmes cellules dépasse un seuil prédéterminé ou préconfiguré ;
la réception, d'un dispositif de communication, informations de gestion de ressources radio pour une activité de gestion de ressources radio liée à la première cellule ;
dans lequel le signal d'au moins une deuxièmes cellule a été évalué au niveau du dispositif de communication pour déterminer les informations de gestion de ressources radio reçues ; le procédé étant **caractérisé en ce qu'**il reçoit du dispositif de communication des informations d'indication de corrélation indiquant la mesure de corrélation .

14. Produit de programme informatique pour un ordinateur, comprenant des portions de code logiciel pour effectuer les étapes de la revendication 12 ou 13 lorsque ledit produit est exécuté sur l'ordinateur.
